# EUROPÄISCHE PATENTSCHRIFT

(11) **EP 1 660 771 B1**
(45) Veröffentlichungstag und Bekanntmachung des Hinweises auf die Patenterteilung: **18.08.2010**
(21) Anmeldenummer: 04764678.1
(22) Anmeldetag: 01.09.2004
(51) Int. Cl.: F02M 35/10

(54) **LUFTANSAUGKANALSYSTEM FÜR EINE VERBRENNUNGSKRAFTMASCHINE**
AIR-INTAKE DUCT SYSTEM FOR A COMBUSTION ENGINE
SYSTEME DE CANAL D'ASPIRATION D'AIR POUR MOTEUR A COMBUSTION INTERNE

(30) Priorität: 05.09.2003 DE 10341393
(43) Veröffentlichungstag der Anmeldung: 31.05.2006
(73) Patentinhaber: Pierburg GmbH, 41460 Neuss (DE)
(72) Erfinder: KÜHNEL, Hans-Ulrich, 41239 Mönchengladbach (DE); SANDERS, Michael, 41564 Kaarst (DE); SCHÜRFELD, Armin, 40670 Meerbusch (DE); THÖNNESSEN, Dieter, 41751 Viersen (DE)
(74) Vertreter: Patentanwälte ter Smitten
(86) Internationale Anmeldenummer: PCT/EP2004/009713
(87) Internationale Veröffentlichungsnummer: WO 2005/024220

(56) Entgegenhaltungen:
- EP-A- 1 059 435
- EP-A- 1 375 896
- US-A1- 2003 010 314

## Beschreibung

Die Erfindung betrifft ein Luftansaugkanalsystem für eine Verbrennungskraftmaschine.

Luftansaugkanalsysteme für Verbrennungskraftmaschinen, Abgasrückführventile, Abgaskühler, Abgaseinleitvorrichtungen und Drosselklappen sowie deren Funktion sind allgemein bekannt und werden in einer Vielzahl von Anmeldungen beschrieben. In den letzten Jahren wurde versucht, die Einzelteile eines gesamten Ansaugsystems und Abgasrückführungssystems besser aufeinander abzustimmen und auf möglichst geringen Bauraum komplette Einheiten aus einer Hand zur Verfügung zu stellen.

Ein dementsprechendes System wird beispielsweise in der noch nicht veröffentlichten Anmeldung mit dem Aktenzeichen 102 28 247 beschrieben. Hierin wird über eine Verteilerplatte das Saugrohr mit einem Abgaskühler, einer Abgaseinleitvorrichtung, einem Abgasrückführventil und einer Drosselklappe verbunden, so daß eine kompakte Einheit entsteht. Bei der Herstellung eines solchen Luftansaugkanalsystems müssen jedoch weiterhin alle Einzelteile über Flansche miteinander verbunden werden und jedes Einzelteil mit einem eigenständigen Gehäuse hergestellt werden. So weist sowohl das Abgasrückführventil ein kanalbildendes Gehäuse auf, als auch die Drosselklappenvorrichtung einen kanalbildenden Drosselklappenstutzen, welcher lediglich mit der Verteilerplatte des Systems verbunden wird. Entsprechend weist dieses Luftansaugkanalsystem ein relativ hohes Gewicht auf und es werden viele Montageschritte zur Verbindung der Einzelteile benötigt. Des weiteren besteht keine Integration aller bekannten Vorrichtungen zur Schadstoffreduzierung beziehungsweise Kraftstoffverbrauchsreduzierung.

In der noch nicht veröffentlichten Anmeldung mit dem Aktenzeichen 103 21 533 wird ein Luftansaugkanalsystem offenbart, bei dem ein Abgaskühler in den Abgasrückführkanal, welcher einteilig mit dem Saugrohrgehäuse ausgeführt ist, integriert ist. Eine solche Ausführung reduziert zwar die Anzahl der Fertigungsschritte, weist jedoch den Nachteil auf, daß das Abgas in jedem Betriebszustand der Verbrennungskraftmaschine durch den Kühler geführt wird und eine Integration weiterer Bauteile nicht vorgesehen ist. Ein anderes Luftansangkanalsystem wird auch im Dokument

EP-1375896 offenbart.

Ausgehend von diesem Stand der Technik ist es Aufgabe der Erfindung, ein Luftansaugkanalsystem vorzustellen, welches vormontierte aufeinander abgestimmte Einheiten aufweist, welche ineinander integrierbar sind. Des weiteren sollen im Vergleich zu bekannten Luftansaugkanalsystemen Montage- und Fertigungsschritte eingespart werden und eine weitere Kostenreduzierung sowie eine Gewichtsreduzierung erzielt werden. Eine Integration weiterer Bauteile zur Schadstoffreduzierung und Kraftstoffverbrauchsreduzierung soll verwirklicht werden. Das Luftansaugkanalsystem soll so ausgeführt sein, dass die Anbauteile für verschiedene Motoren verwendet werden können, so dass durch einen modularen Aufbau Fertigungs- und Entwicklungskosten reduziert werden können.

Diese Aufgabe wird dadurch gelöst, daß das Luftansaugkanalsystem ein Gehäuse mit einer Oberschale und einer Unterschale aufweist, welche miteinander verbunden einen Sammeleinlaßkanal und einzelne zu Zylindern der Verbrennungkraftmaschine führende Lufteinlaßkanäle bilden, wobei das Luftansaugkanalsystem ein Abgasrückführventil, einen Abgasrückführkanal, einen Abgaskühler und eine Abgaseinleitvorrichtung, über welche Abgas in den Sammeleinlaßkanal des Luftansaugkanalsystems einleitbar ist und eine Drosselklappe, über welche die angesaugte Luftmenge regelbar ist, aufweist, welche fest mit dem Luftansaugkanalsystem verbunden sind, wobei der Abgasrückführkanal im wesentlichen einstückig mit einer Schale des Luftansaugkanalsystems hergestellt ist und das Abgasrückführventil und die Drosselklappe als Steckventile ausgeführt sind, welche in korrespondierende Öffnungen des Gehäuses einsteckbar sind. Durch ein solches, eine Vielzahl an Bauteilen integrierendes System, wird eine Reduzierung der Bauteileanzahl und des Gesamtgewichts des Luftansaugkanalsystems erreicht, da keine zusätzlichen Gehäuse für die Drosselklappe beziehungsweise das Abgasrückführventil hergestellt werden müssen. Bei einheitlicher Ausbildung der Öffnungen können baugleiche Steckventile für verschiedene Verbrennungskraftmaschinen verwendet werden.

Eine weitere Integration insbesondere zur Schadstoffreduzierung wird dadurch erreicht, daß der Abgasrückführkanal in Strömungsrichtung durch eine Trennwand im wesentlichen in zwei parallele im Querschnitt zur Strömungsrichtung einseitig offene Kanäle unterteilt ist, wobei der erste Kanal als Kühlkanal und der zweite Kanal als Bypasskanal dient und das Gehäuse des Abgasrückführkanals eine Öffnung aufweist, in welche eine Bypassklappe, die als Steckventil ausgeführt ist, einsteckbar ist. Durch die Unterteilung des Abgasrückführkanals in den Kühlkanal und den Bypasskanal können je nach Betriebszustand der Verbrennungskraftmaschine mit Hilfe der Bypassklappe optimierte Abgastemperaturen erreicht werden. Es verkürzen sich hierdurch die Kaltstart- und Warmlaufphasen des Motors. Die Ausführung der Bypassklappe als Steckventil birgt eine weitere Integration bei gleichzeitiger Gewichts- und Fertigungskostenreduzierung.

In einer bevorzugten Ausführungsform sind der Abgasrückführkanal und die Trennwand einstückig mit der Oberschale des Luftansaugkanalsystems ausgebildet und die Öffnungen für die korrespondierenden Steckventile sind ebenfalls in der Oberschale angeordnet. Somit bildet die Oberschale des Luftansaugkanalsystems den Einbauort für alle genannten Anbauteile, was zu einer vereinfachten Montage führt. Durch die Einstückigkeit von Abgasrückführkanal, Trennwand und Oberschale werden zusätzliche Bauteile beziehungsweise Fertigungsschritte eingespart.

In einer weiterführenden Ausführung sind die Steckventile mit ihren Stellelementen, welche entsprechende Anschlußstecker aufweisen, vormontiert und über Anschlußflansche der Ventile nach dem Einstecken in die Öffnungen ist eine luftdichte Verbindung zum Gehäuse herstellbar. Diese Ausführung unterstreicht den modularen Aufbau dieses Luftansaugkanalsystems, bei dem die Ventile mit ihren Stellelementen komplett vormontiert werden können und erst dann in das Gehäuse eingesteckt und mit diesem verbunden werden. Durch eine entsprechende Ausführung der Anschlußflansche, beziehungsweise zusätzlich an den Steckventilen beispielsweise angespritzte Dichtungen, entsteht eine leckagefreie Verbindung zum Gehäuse, so daß über die Anbauteile keine Falschluft in das Luftansaugkanalsystem gelangen kann. Aufgrund der durch die Öffnungen festgelegten Lage zum Anbau der Steckventile wird des weiteren die Montage vereinfacht.

In einer bevorzugten Ausführungsform weist der Abgaskühler eine Wärmeübertragungseinheit und einen Deckelteil auf, wobei die Wärmeübertragungseinheit im Kühlkanal angeordnet ist, eine Flanschplatte, welche zumindest die offene Seite des Kühlkanals verschließt und einen von Kühlflüssigkeit durchströmten Kühlflüssigkeitkanal aufweist, der im Querschnitt zur Strömungsrichtung einseitig offen ausgebildet ist, und wobei das Deckelteil den Kühlflüssigkeitskanal verschließt und einen Kühlflüssigkeitseinlaßstutzen und einen Kühlflüssigkeitsauslaßstutzen aufweist und die Flanschplatte oder das Deckelteil gleichzeitig die offene Seite des Bypasskanals verschließt. Durch diese Ausführung wird eine gute Zugänglichkeit bei der Montage des Abgaskühlers und ein guter Wärmeübergang aufgrund der Lage der Wärmeübertragungseinheit im Kühlkanal sicher gestellt.

Des weiteren ist es vorteilhaft die Wärmeübertragungseinheit einstückig mit Formelementen eines Strömungsleitkörpers herzustellen, welcher mit dem Gehäuse des Sammeleinlaßkanals die Abgaseinleitvorrichtung bildet, wodurch erneut die Bauteilanzahl reduziert wird und eine optimierte Einleitung des Abgases in den Sammeleinlaßkanal sicher gestellt wird.

In einer Weiterbildung der Erfindung weist die Bypassklappe ihr Stellelement, eine durch das Stellelement betätigbare Antriebswelle, einen fest mit der Welle verbundenen Klappenkörper und den Anschlußflansch auf, der einen mit der Öffnung des Abgasrückführkanals korrespondierenden und in diese Öffnung greifenden Absatz aufweist, wobei dieser Absatz zwei Anschläge aufweist, durch welche die Endlagen des Klappenkörpers festgelegt sind. Eine solche Bypassklappe ist vor dem Einbau separat prüfbar und kann aufgrund der mechanisch festgelegten Endlagen mit einem einfachen und preisgünstigen Auf-/Zu-Stellelement ausgestattet sein.

In einer weiterführenden Ausgestaltung der Erfindung sind in den zu den einzelnen Zylindern führenden Luftansaugkanälen in der Unterschale des Luftansaugkanalsystems Ladungsbewegungsklappen angeordnet, wodurch die Ladungsbewegung der angesaugten Luft optimiert werden kann, was zu einer höheren AGR-Verträglichkeit und einer verbesserten Verbrennung führt.

In einer bevorzugten Ausgestaltung sind die Ladungsbewegungsklappen strömungsoptimiert geformt und so angeordnet, daß ein möglichst geringer Strömungswiderstand besteht. Dazu können die Klappen beispielsweise in den entsprechenden Wandungen des Luftansaugkanalsystems in ihrer geöffneten Stellung verschwinden, so daß im wesentlichen der Kanal in diesem Zustand störungsfrei durch die Klappe verlängert wird. Gleichzeitig sollte die Klappe so ausgeführt sein, daß auch eine störungsfreie Verlängerung in entsprechender Schließstellung der Klappen erfolgt, so daß in beiden Stellungen geringere Ladungswechselverluste entstehen.

Eine weitere Verbesserung der Verbrennung in den Zylindern wird dadurch erzielt, daß die zu den einzelnen Zylindern führenden Luftansaugkanäle in der Unterschale in ihrem in Strömungsrichtung gesehenen Endbereich jeweils eine Trennwand aufweisen, welche jeden Kanal in zwei Kanalteile unterteilt, wobei zumindest ein Kanalteil durch jeweils eine der Ladungsbewegungsklappen beherrschbar ist.

In einer bevorzugten Ausführungsform der Erfindung ist die Trennwand jeweils in einem Einsatz angeordnet, so daß dieser die Unterteilung in die zwei Kanalteile herstellt, wobei der Einsatz zumindest formschlüssig in die Luftansaugkanäle der Unterschale gesteckt ist und seine Außenwände im wesentlichen an den Innenwänden der Luftansaugkanäle anliegen, und die Ladungsbewegungsklappen im Einsatz angeordnet sind. Durch diese Einsätze, die beispielsweise aus Kunststoff hergestellt sein können, wird die Fertigung der Unterschale wesentlich vereinfacht, so daß mit minimalem Fertigungsaufwand die Trennwand zur Verfügung gestellt werden kann.

In einer weiterführenden Ausführungsform weist jeder Einsatz eine Bohrung auf, durch welche eine Betätigungswellle reicht, auf der je eine der Ladungsbewegungsklappen angeordnet ist, wobei die Betätigungswellen jeweils durch entsprechende Ausnehmungen in der Unterschale nach außen reichen, wo sie jeweils fest mit einem Zahnradsegment verbunden sind, wobei alle Zahnradsegmente mit einer zumindest im Bereich der Zahnradsegmente als Schneckenwelle ausgeführten Welle in Wirkverbindung stehen, welche durch eine Stellvorrichtung in Drehung versetzbar ist, so daß die Stellvorrichtung alle Ladungsbewegungsklappen über die Schneckenwelle und die Zahnradsegmente synchron antreibt. Alternativ sind auch von einer Zahnstange linear betätigte Zahnsegmente einsetzbar. Die Verstellung über die Schneckenwelle ermöglicht eine sehr genaue Verstellung der Ladungsbewegungsklappen und bietet gleichzeitig eine hohe Lebensdauer der Stellvorrichtung. Gleichzeitig wird der Montageaufwand minimiert und eine synchrone Verstellung der Klappen durch die Ansteuerung mit nur einer Stellvorrichtung sicher gestellt.

In einer wiederum weiterführenden Ausführungsform reichen die Betätigungswellen nach außen in einen einseitig offenen Kanal, in dem die Zahnradsegmente, die Schneckenwelle und gegebenenfalls die Stellvorrichtung angeordnet sind, wobei der einseitig offene Kanal in der Unterschale ausgebildet und durch einen Deckel verschlossen ist, wodurch ein Eintreten von Verschmutzungen verhindert wird, so daß die Lebensdauer der gesamten Stellvorrichtung gesteigert wird und Fehler weitestgehend ausgeschlossen werden können.

Die Trennwände können dabei sowohl horizontal angeordnet sein, so daß die Ladungsbewegungsklappen als Tumbleklappen dienen oder alternativ vertikal angeordnet sein, so daß jeder der beiden Kanäle mit je einem Einlaßventil des Zylinders korrespondiert und die Ladungsbewegungsklappen als Drallklappen dienen. Beide Ausführungen führen zu einer verbesserten Verbrennung.

Vorteilhafterweise sind die Ober- und Unterschale sowie die Wärmeübertragungseinheit aus Druckguß vorzugsweise Aluminiumdruckguß hergestellt, wodurch eine deutliche Gewichtsreduzierung entsteht und ein korrosionsbeständiger Werkstoff mit hoher Wärmeleitfähigkeit zur Verfügung gestellt wird.

In einer weiteren Ausführungsform weist das Gehäuse des Luftansaugkanalsystems eine Öffnung auf, in welcher ein Luftmassensensor angeordnet ist, so daß innerhalb eines komplett zur Verfügung gestellten Luftansaugsystems alle notwendigen Einheiten gemeinsam aufeinander abgestimmt angeboten werden können.

Durch die hohe Integration aller Komponenten entstehen Kostenvorteile durch den Entfall von Schnittstellen und Haltern sowie die geringe notwendige mechanische

Bearbeitung. Dieses Luftansaugkanalsystem zeichnet sich durch sein im Vergleich zu bekannten Ausführungen deutlich reduziertes Gewicht aus, wodurch ein reduzierter Kraftstoffverbrauch entsteht. Zusätzlich wird eine verbesserte Abgasqualität erreicht. Durch dieses integrierte Modul verringert sich auch der Prüfumfang beim Kunden deutlich, da lediglich eine Prüfung des Gesamtmoduls notwendig ist. Die Einsteckventile können ohne weitere Anpassung für verschiedene Motoren eingesetzt werden, was Herstell- und Entwicklungskosten reduziert. Da die Einzelteile optimal aufeinander abgestimmt sind, wird die Montage des Gesamtsystems extrem vereinfacht und so zusätzlich Kosten reduziert. Ein erfindungsgemäßes Luftansaugkanalsystem, sowie die für dieses System benötigten Einzelteile sind in den Zeichnungen dargestellt und werden nachfolgend beschrieben.
Figur 1 zeigt ein erfindungsgemäßes Luftansaugkanalsystem im zusammengebauten Zustand in perspektivischer Darstellung.
Figur 2 zeigt das erfindungsgemäße Luftansaugkanalsystem aus Figur 1 im zusammen gebauten Zustand, wobei die Oberschale mit Ausnahme des Bereiches in dem die Drosselklappe angeordnet ist, heraus geschnitten wurde, in perspektivischer Darstellung.
Figur 3 zeigt die Oberschale des erfindungsgemäßen Luftansaugkanalsystems in perspektivischer Darstellung.
Figur 4 zeigt eine Ausführung einer Bypassklappe zum Einbau in das Luftansaugkanalsystem.
Figur 5 zeigt in perspektivischer Darstellung eine Unterschale des Luftansaugkanalsystems aus Richtung der späteren Anbauseite am Zylinderkopf.
Figur 6 zeigt ein Abgasrückführventil des erfindungsgemäßen Luftansaugkanalsystems in perspektivischer Darstellung.
Figur 7 zeigt eine Drosselklappe des erfindungsgemäßen Luftansaugkanalsystems in perspektivischer Darstellung.
Figur 8 zeigt eine Wärmeübertragungseinheit des erfindungsgemäßen Luftansaugkanalsystems in perspektivischer Darstellung.
Figur 9 zeigt eine Anordnung von Luftbewegungsklappen sowie ihrer Stellvorrichtung in ihren Einsätzen
Figur 10 zeigt eine weitere Ansicht der Oberschale gemäß Figur 3 in perspektivischer Darstellung.

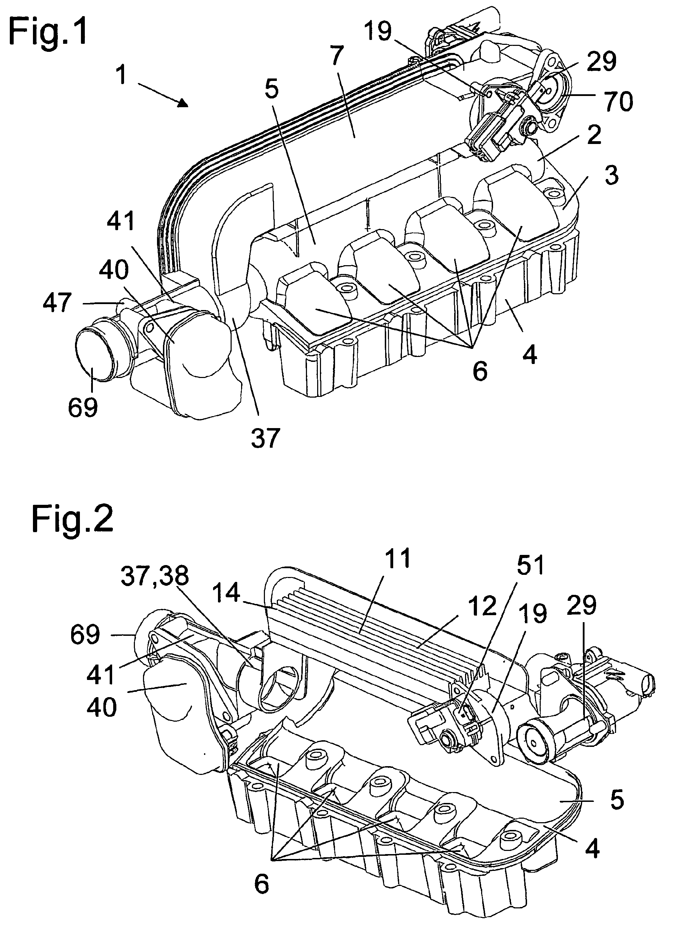

Das in Figur 1 dargestellte erfindungsgemäße Luftansaugkanalsystem 1 weist ein zweiteiliges Gehäuse 2 bestehend aus einer Oberschale 3 und einer Unterschale 4 auf, welche beim Zusammenbau miteinander z. B. über das Friction-Stir-Welding-Verfahren verschweißt werden. Im zusammengesetzten Zustand bilden die Oberschale 3 und die Unterschale 4 einen Sammeleinlaßkanal 5 und einzelne zu den Zylindern einer Verbrennungskraftmaschine führende Lufteinlaßkanäle 6, wobei im vorliegenden Ausführungsbeispiel ein Luftansaugkanalsystem 1 für eine vierzylindrige Verbrennungskraftmaschine mit zwei Einlaßventilen je Zylinder dargestellt ist, so daß vier Lufteinlaßkanäle 6 dargestellt sind.

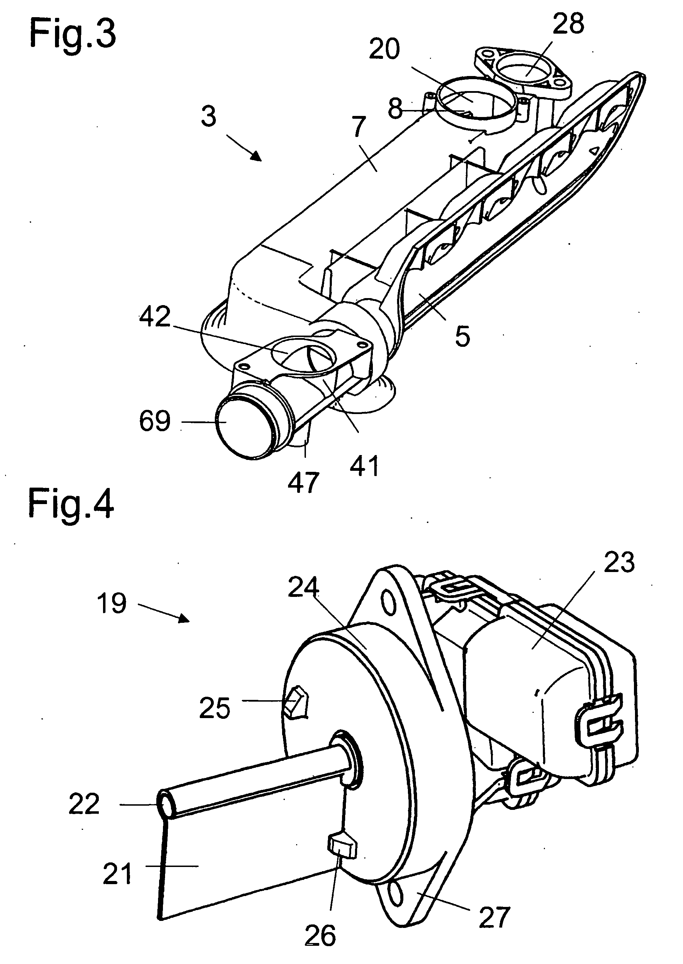

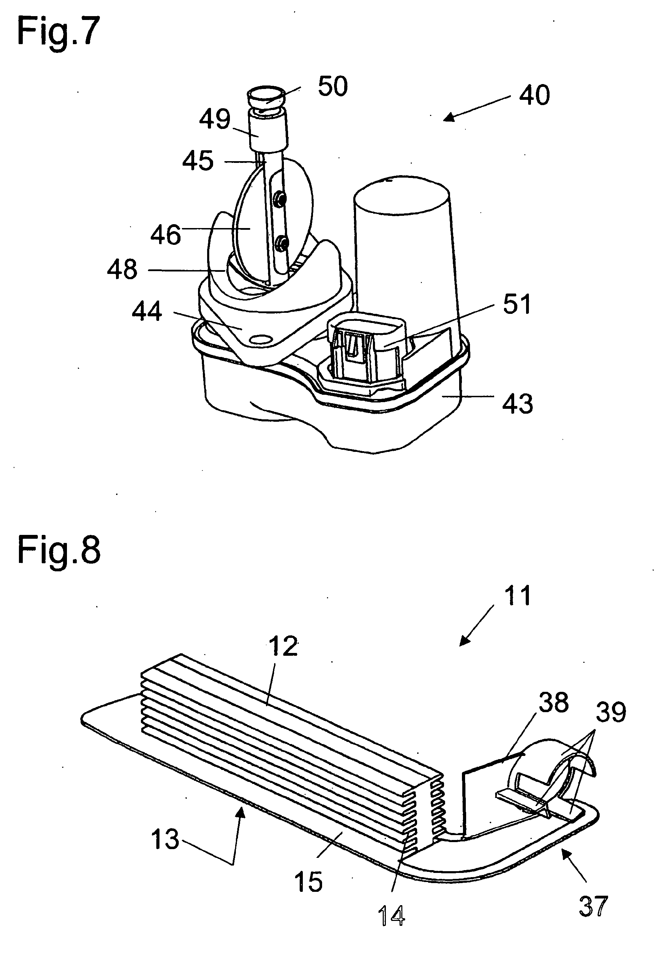

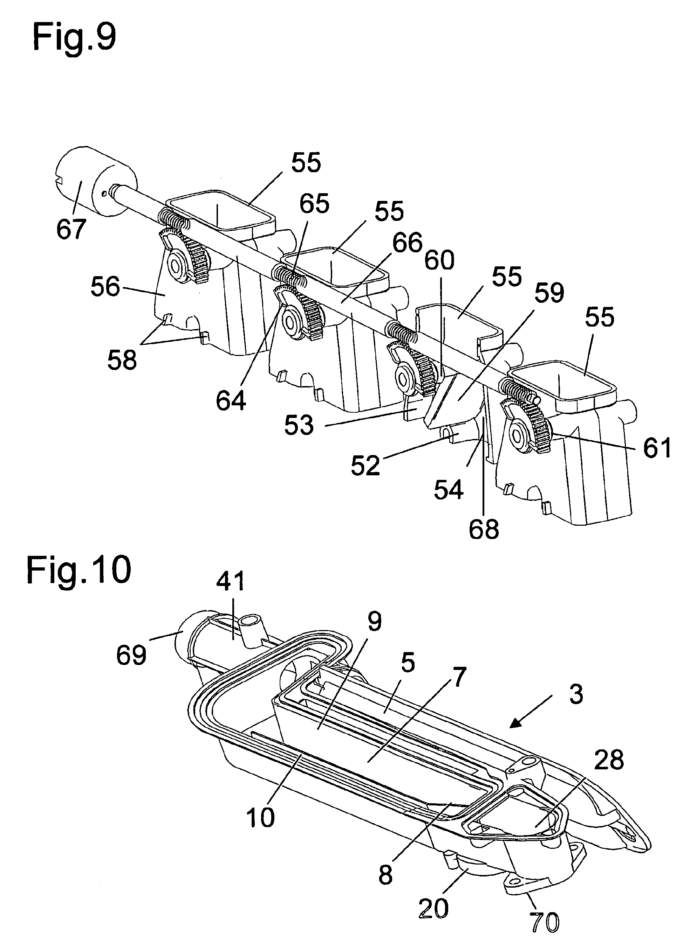

Die in Figur 3 dargestellte Oberschale 3 ist im Aluminiumdruckgußverfahren hergestellt und weist neben den teilweise darin ausgebildeten Kanälen 5, 6 einen im Querschnitt zur Strömungsrichtung einseitig offenen Abgasrückführkanal 7 auf, welcher einstückig mit der Oberschale 3 hergestellt ist, so daß zusätzliche Halter entfallen, wodurch die Anzahl an Schnittstellen reduziert wird. Zusätzlich können Bearbeitungsschritte eingespart werden. Der Abgasrückführkanal 7 ist, wie aus Figur 10 ersichtlich, entlang seiner Strömungsrichtung durch eine Trennwand 8 in zwei Kanäle unterteilt, wobei der erste Kanal als Kühlkanal 9 und der zweite Kanal als Bypasskanal 10 dient. Im zusammengebauten Zustand ist im Kühlkanal 9 ein Abgaskühler 11 angeordnet, der in Figur 8 näher dargestellt ist.

Der Abgaskühler 11 besteht im wesentlichen aus einer Wärmeübertragungseinheit 12, in der ein im Querschnitt zur Strömungsrichtung einseitig offener Kühlflüssigkeitskanal 13 ausgebildet ist. Der Wärmeübergang erfolgt von diesem Kühlflüssigkeitskanal 13 über eine Vielzahl an Stegen 14, welche im Kühlkanal 9 für einen guten Wärmeübergang zum Abgas sorgen. Die Wärmeübertragungseinheit 12 weist zusätzlich eine obere Flanschplatte 15 auf, welche beim Einsatz in die Oberschale 3 die offene Seite des Kühlkanals 9 und des Bypasskanals 10 verschließt. Die Befestigung der Wärmeübertragungseinheit 12 an der Oberschale 3 erfolgt wiederum im Schweißverfahren. Ein Deckelteil 16 verschließt die offene Seite des Kühlflüssigkeitskanals 13. Das Deckelteil weist des weiteren einen Einlaßstutzen 17 und einen Auslaßstutzen 18 für die Kühlflüssigkeit auf.

Die Umschaltung zwischen dem Kühlkanal 9 und dem Bypasskanal 10 für die Strömung des Abgases erfolgt über eine Bypassklappe 19, die als Steckventil ausgeführt ist und in eine entsprechende Öffnung 20 der Oberschale 3 des Luftansaugkanalsystems 1 gesteckt werden kann. Die Lage der Bypassklappe 19 im zusammen gebauten Zustand ist der Figur 2 zu entnehmen. Des weiteren ist die Bypassklappe 19 in Figur 4 dargestellt. Sie besteht aus einem Klappenkörper 21, welcher über eine Antriebswelle 22 in Drehung versetzbar ist. Der Antrieb der Antriebswelle 22 erfolgt über ein Stellelement 23, welches entweder als einfacher Auf-/Zu-Steller ausgeführt werden kann oder aber auch Zwischenstellungen verwirklichen kann, so daß eine genauere Regelung der Abgastemperatur möglich wäre. Dargestellt ist hier ein einfacher Auf-/Zusteller, wobei an einem Absatz 24, welcher beim Zusammenbau in der Öffnung 20 angeordnet ist, zwei Anschläge 25, 26 angeordnet sind, welche die jeweiligen Endlagen der Klappe 21 festlegen. Zwischen dem Stellelement 23 und dem Absatz 24 ist ein Anschlußflansch 27 angeordnet, der auf dem Gehäuse 2 der Oberschale 3 zu liegen kommt und über den die Befestigung der Bypassklappe 19 an der Oberschale 3 mittels Schrauben erfolgt. Es sei darauf hingewiesen, daß auch eine andere Befestigungsart möglich wäre.

Aus Figur 3 ist ersichtlich, daß unmittelbar neben der Öffnung 20 für die Bypassklappe 19 eine weitere Öffnung 28 in der Oberschale 3 ausgebildet ist, in welche ein den Abgasrückführstrom steuerndes Abgasrückführventil 29 beim Zusammenbau des Luftansaugkanalsystems eingesteckt wird. Die entsprechende Lage des Abgasrückführventils 29 ist erneut aus Figur 2 ersichtlich.

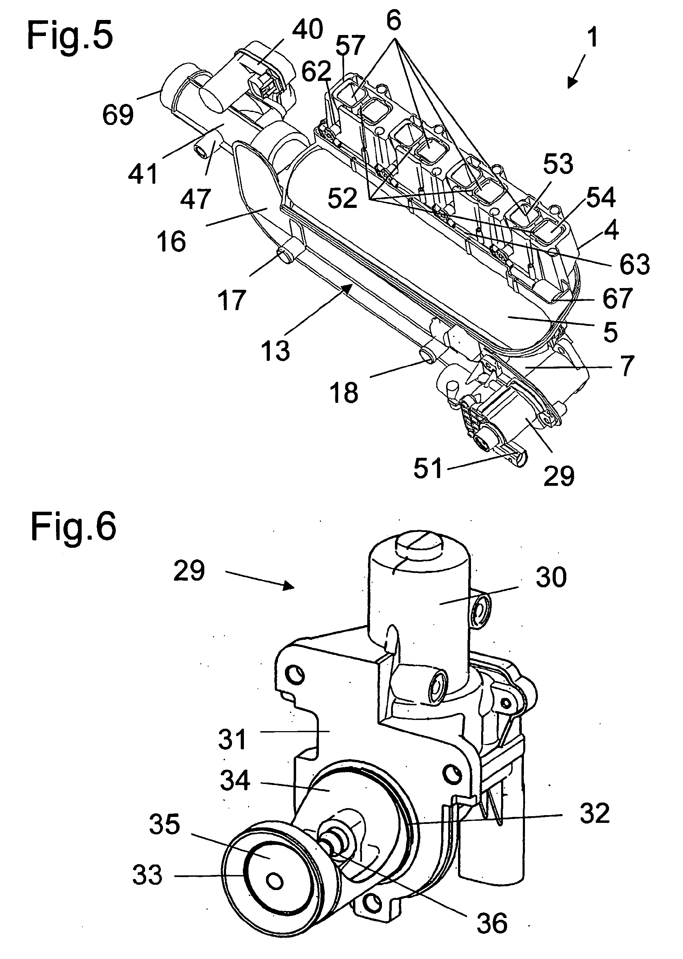

Das über ein elektromotorisches Stellelement 30 angetriebene Abgasrückführventil 29 gemäß Figur 6 ist ebenfalls als Steckventil ausgeführt und weist einen Anschlußflansch 31 auf, über den das Abgasrückführventil 29 nach dem Einstecken an der Oberschale 3 befestigt wird. Eine zusätzliche Dichtung 32, welche am Abgasrückführventil 29 angeordnet ist, sichert dabei den dichten Verschluß des Abgasrückführkanals 7 am Einbauort. Das Abgasrückführventil 29 ist ein bekanntes Abgasrückführventil, wobei ein Ventilsitz 33 an einem einen Teilkanal bildenden Gehäuse 34 des Abgasrückführventils 29 ausgebildet ist, wobei der Ventilsitz 33 mit einem Ventilteller 35 in Wirkverbindung steht. Der Ventilteller 35 ist wie üblich mit einer Ventilstange 36 verbunden, die von dem Stellelement 30 angetrieben wird. Entsprechend wird die in den Abgasrückführkanal 7 eingeleitete Abgasmenge durch die Stellung des Ventiltellers 35 gesteuert.

Das Abgas gelangt somit über das Abgasrückführventil 29, die Bypassklappe 19 und den Abgaskühler 11 oder entlang des Bypasskanals 10 über eine Abgaseinleitvorrichtung 37 in den Sammeleinlaßkanal 5, wo es sich mit der Frischluft vermischt. Die Abgaseinleitvorrichtung 37 besteht aus einem Strömungsleitkörper 38, der durch einzelne Formelemente 39 gebildet ist und im hier vorliegenden Ausführungsbeispiel einstückig mit der Wärmeübertragungseinheit 12 ausgebildet ist, was in den Figuren 2 und 8 zu erkennen ist. Der Strömungsleitkörper 38 ist im vorliegenden Beispiel im wesentlichen ringförmig, wobei die einzelnen Formelemente 39 im wesentlichen als Ringabschnitte ausgeführt sind. Die Abgaseinleitvorrichtung 37 wird durch einen ringförmigen Kanal, welcher zwischen dem Gehäuse 2 der Oberschale 3 sowie dem Strömungsleitkörper 38 ausgebildet ist, komplettiert, wobei eines der Formelemente 39 des Strömungsleitkörpers 38 so ausgebildet ist, daß das Abgas in diesen ringförmigen Kanal geleitet wird von wo aus es durch Öffnungen zwischen den Formelementen 39 in den Sammeleinlaßkanal 5 fließen kann. Diese Formelemente 39 sind so angeordnet, daß eine optimale Vermischung mit der frisch angesaugten Luft erfolgt.

Die angesaugte Frischluftmenge beziehungsweise der Saugrohrdruck wird über eine Drosselklappe 40 geregelt. Der zugehörige Drosselklappenstutzen 41 ist einteilig mit der Oberschale 3 hergestellt. An der entsprechenden Position an der Oberschale 3 weist das Gehäuse 2 somit eine zusätzliche Öffnung 42 auf, in die die als Steckventil ausgeführte Drosselklappe 40 gesteckt werden kann. In Figur 7 ist eine derartige Drosselklappe 40 dargestellt. Sie wird über ein elektromotorisches Stellelement 43 angetrieben. Das Steckventil wird erneut über einen Anschlußflansch 44 an der Oberschale 3 befestigt. Das Stellelement 43 treibt wie bekannt eine Drosselklappenwelle 45 an, auf der ein Drosselklappenkörper 46 angeordnet ist. Die Lagerung an der vom Stellelement 43 abgewandten Seite dieser Welle 45 erfolgt über eine entsprechende Lagerstelle 47, welche in der Oberschale 3 ausgebildet ist. Aufgrund der Ausführung als Steckventil weist diese Drosselklappenvorrichtung 40 ein teilkanalbildendes Gehäuseteil 48 auf, welches der Form des Drosselklappenkörpers 46 bzw. der inneren Kanalform des in der Oberschale 3 ausgebildeten Drosselklappenstutzens 41 derart angepasst ist, dass der Kanal bei geöffneter Klappe 40 im wesentlichen störungsfrei verlängert wird. Das in der Lagerstelle 47 der Oberschale 3 angeordnete Lager 49 sowie eine entsprechende Dichtung 50 zum Verhindern des Ansaugens von Falschluft sind ebenfalls in Figur 7 zu erkennen.

Alle angesprochenen Stellelemente 23, 30 und 43 zu den Steckventilen weisen jeweils Anschlußstecker 51 auf, über welche die Verbindung beispielsweise zu einer Motorsteuerung hergestellt werden kann.

In Figur 5 ist die Unterschale des Luftansaugkanalsystems 1 dargestellt. Die einzelnen zu den Zylindern der Verbrennungkraftmaschine führenden Lufteinlaßkanäle 6 sind hier jeweils durch eine Trennwand 52 in zwei Kanalteile 53, 54 aufgeteilt, wobei die Aufteilung in die zwei Kanalteile 53, 54 durch einen Einsatz 55 für jeden einzelnen Lufteinlaßkanal 6 hergestellt wird. In den Einsätzen 55, die in Figur 9 zu erkennen sind, sind auch jeweils die Trennwände 52 angeordnet. Die Einsätze 55 werden von der späteren Zylinderkopfseite in die Lufteinlaßkanäle 6 eingesteckt, wo sie zumindest formschlüssig mit ihren jeweiligen Außenwänden 56 im wesentlichen an den Innenwänden 57 der Lufteinlaßkanäle 6 anliegen. Eine zusätzliche formschlüssige Befestigung erfolgt über Nasen 58, welche an den Einsätzen 55 ausgebildet sind. Die hier dargestellten Trennwände 52 unterteilen die Lufteinlaßkanäle 6 jeweils in vertikaler Richtung, so daß jedem Einlaßventil des vierzylinderigen Verbrennungsmotors ein Kanal zugeordnet ist. In den Einsätzen 55 sind vier Ladungsbewegungsklappen 59 angeordnet, welche im hier vorliegenden Fall als Drallklappen ausgebildet sind. Bei einer Unterteilung der Lufteinlaßkanäle 6 mit einer horizontal angeordneten Trennwand 52 könnten entsprechend Klappen zur Erzeugung eines Tumbles angeordnet werden. Jede Ladungsbewegungsklappe 59 kann jeweils das Kanalteil 54 freigeben oder verschließen, wodurch gegebenenfalls ein Drall im Zylinder erzeugt wird, da lediglich über ein Einlaßventil Luft in den Verbrennungsraum gelangt.

Die Ladungsbewegungsklappen 59 sind jeweils gemäß Figur 9 auf einer Betätigungswelle 60 angeordnet, die durch eine Bohrung 61 in den Einsätzen 55 reicht. Die Lagerung der Betätigungswellen 60 kann dabei entweder, wie dargestellt, in den Einsätzen 55 oder in entsprechenden Lagerstellen der Oberschale 3 erfolgen. Die Betätigungswellen 60 reichen, wie aus Figur 5 ersichtlich, durch eine Ausnehmung 62 in der Unterschale 4 in einen Kanal 63. Hier ist am jeweiligen Ende der Betätigungswellen 60 fest mit diesem verbunden ein Zahnradsegment 64 angeordnet, welches in Wirkverbindung mit einer in diesem Bereich als Schneckenwelle 65 ausgeführten Welle 66 stehen. Diese Welle 66 wird von einer Stellvorrichtung 67 angetrieben, welche wie die Zahnradsegmente 64, die Welle 66 und die Enden der Betätigungswellen 60 in dem Kanal 63 angeordnet ist. Dieser Kanal 63 ist durch einen hier nicht dargestellten Deckel verschließbar, so daß keine Verunreinigungen in den Antriebsbereich der Ladungsbewegungsklappen 59 eindringen kann. Es sei noch darauf hingewiesen, daß die Ladungsbewegungsklappen 59 so ausgeführt sind, daß sie eine strömungsoptimierte Form aufweisen. Das bedeutet, daß eine Kanalinnenwand der Einsätze 55 eine Ausnehmung 68 aufweist, in welcher die Klappe 59 in ihrem geöffneten Zustand derart anliegt, daß die Strömung im Kanal 54 störungsfrei verläuft, da der Kanal 54 durch die anliegende Klappe 59 im wesentlichen glatt verlängert wird. Gleichzeitig werden jegliche ungewollte Verwirbelungen oder Strömungsstörungen auch bei geschlossener Stellung der Ladungsbewegungsklappe 59 verhindert, da ein kantenfreier Übergang zwischen den Wänden des Einsatzes über die Klappe zur Trennwand 52 aufgrund ihrer Form gewährleistet ist.

Zusätzlich zu den erwähnten Anbauteilen kann im Gehäuse 2 eine weitere Öffnung ausgebildet werden, in der ein hier nicht dargestellter Luftmassensensor angeordnet werden kann.

Die Funktion des gesamten Luftansaugkanalsystems 1 sowie die Stellungen der unterschiedlichen Anbauteile wird im folgenden beispielhaft für verschiedene Lastbereiche eines Ottomotors dargelegt.

Über einen Ansaugstutzen 69 gelangt Frischluft in das Luftansaugkanalsystem 1. Entsprechend der vom Fahrer des Fahrzeugs gewählten Gaspedalstellung wird der Öffnungswinkel der Drosselklappe 40 geregelt, so daß eine von der Stellung der Drosselklappe 40 abhängige Luftmenge in den Sammeleinlaßkanal 5 strömt. Unmittelbar in Strömungsrichtung gesehen hinter der Drosselklappe befindet sich die Abgaseinleitvorrichtung 37. Über die Öffnungen zwischen den Formelementen 39 der Abgaseinleitvorrichtung 37 strömt Abgas in den Sammeleinlaßkanal 5, wo es sich mit der Frischluft mischt. Das Gemisch strömt weiter durch den Sammeleinlaßkanal 5 in die vier Lufteinlaßkanäle 6, von wo aus die Luft über die Einsätze 55 zu einem nicht dargestellten Zylinderkopf strömt. Je nach Stellung der Drallklappen 59 gelangt die Luft entweder über beide Kanalteile 53, 54 in den Zylinderkopf oder bei geschlossener Luftbewegungsklappe 59 lediglich über die Kanalteile 53, so daß ein Drall im Zylinder erzeugt wird. Die entsprechende Verstellung der Ladungsbewegungsklappe 59 erfolgt über die Stellvorrichtung 67.

Die Strömung des Abgases erfolgt von einem nicht dargestellten Abgaskrümmer über einen in der Oberschale 3 ausgebildeten Abgaseinlaß 70 zur Unterseite des Abgasrückführventils 29. Ist das Abgasrückführventil 29 geöffnet, so kann der Abgasstrom durch das Abgasrückführventil 29 in den Abgasrückführkanal 7 strömen. Dabei ist es abhängig von der Stellung der Bypassklappe 19, welche in Strömungsrichtung des Abgases gesehen direkt hinter dem Abgasrückführventil 29 angeordnet ist, ob der Abgasstrom durch den Kühlkanal 9 oder den Bypasskanal 10 strömt. Die Welle 22 der Bypassklappe 19 ist im eingebauten Zustand unmittelbar an der Trennwand 8 des Abgasrückführkanals 7 angeordnet, so daß der aus dem Abgasrückführventil 29 strömende Abgasstrom entsprechend umgelenkt werden kann. Das Abgas strömt somit entweder über Kühlkanal 9 der Wärmeübertragungseinheit 12 oder durch den Bypasskanal 10 hin zu der Abgaseinleitvorrichtung 37, von wo aus es in den Sammeleinlaßkanal 5 strömen kann.

Die Kühlflüssigkeit wird gleichzeitig vorzugsweise im Gegenstromverfahren vom Einlaßstutzen 17 durch den Kühlflüssigkeitskanal 13 zum Auslaßstutzen 18 gepumpt.

Je nach Betriebszustand ergeben sich unterschiedliche Stellungen der integrierten Klappen beziehungsweise Ventile 19, 29, 40, 59. Ist die Verbrennungskraftmaschine nicht in Betrieb, so sind die Drosselklappe 40 und das Abgasrückführventil 29 geschlossen, während die Drallklappen 59 und die Bypassklappe 19 sich in offener Stellung befinden. Bei einem nun folgenden Kaltstart des Motors wird die Drosselklappe 40 ebenso wie das Abgasrückführventil 29 geöffnet und die Bypassklappe 19 so eingestellt, daß der Abgasstrom durch den Bypasskanal 10 strömt. Dies hat zur Folge das eine schnelle Aufheizung erfolgt und so die Warmlaufphase des Motors deutlich verkürzt wird. Gleichzeitig springt der Katalysator früher an.

Im Teillastbereich der Verbrennungskraftmaschine wird die Drosselklappe 40 in eine drosselnde also den Kanal teilweise verschließende Stellung gefahren und die Bypassklappe 19 wird so betätigt, daß der Abgasstrom über den Kühlkanal 9 fließt. Das Abgasrückführventil 29 ist dabei geöffnet, während die Drallklappen 59 zur Erzeugung einer besseren Verbrennung geschlossen sind.

Wird die Verbrennungskraftmaschine unter Vollast betrieben, so wird die Drosselklappe 40 vollständig geöffnet, während das Abgasrückführventil 29 geschlossen ist und sich die Drallklappen 59 in vollständig geöffneter Stellung befinden.

Durch diese Vorrichtungen ist eine optimierte Temperatur und Ladungsbewegungssteuerung möglich. Durch die Abgaskühlung verringern sich die NOₓ-Emmissionen durch sinkende Sauerstoffkonzentration der Zylinderfüllung sowie langsamere Verbrennungsgeschwindigkeit und geringere Verbrennungstemperatur. Des weiteren wird die Zylinderfüllung verbessert und die thermische Belastung der Motorkomponenten verringert. Durch den Bypass kann die Start- und Warmlaufphase deutlich verkürzt werden, da heißes Abgas in den Zylinder zurückfließt. Entsprechend steigen Verbrennungs- und Motorabgastemperaturen schneller an, so daß weniger HC- und CO-Emmissionen entstehen. Der Katalysator springt schneller an, so daß eine weitere Reduzierung insbesondere der HC- und CO-Emmissionen die Folge ist. Die Abgasrückführrate kann durch die mögliche Ladungsbewegung mit den Drallklappen weiter erhöht werden, was eine zusätzliche Reduzierung der Emissionen zur Folge hat.

Bei geöffnetem Bypass im Normalbetrieb wird bei zu niedrigen Abgastemperaturen die Betriebstemperatur des Katalysators aufrecht erhalten.

Zusammenfassend wird somit ein Luftansaugkanalsystem zur Verfügung gestellt, mit dem auch zukünftige Emmissionsgrenzwerte erreicht werden können, da eine Vielzahl bekannter zur Verfügung stehender Bauteile zur Schadstoff- und Kraftstoffverbrauchsreduzierung in einem kompletten System angeboten werden, bei dem die Einzelteile optimal aufeinander abgestimmt sind. Das Luftansaugkanalsystem kommt weitestgehend ohne zusätzliche Dichtungen aufgrund der geschweißten Verbindungen aus. Es entfallen zusätzliche Halter oder schwierig zu behandelnde Schnittstellen zwischen Saugrohr und Kühler sowie weitestgehend eine notwendige Nachbearbeitung des Gehäuses. Das Gewicht des Luftansaugkanalsystems ist im Vergleich zu bekannten Systemen deutlich reduziert, nicht zuletzt durch eine Minimierung der Teileanzahl und der Einzelteilgewichte.

Es wird deutlich, daß die Form der einzelnen verwendeten Anbauteile des Ausführungsbeispiels ebenso veränderbar ist, wie gegebenenfalls ihre Lage im System ohne den Schutzumfang des Hauptanspruchs zu verlassen. So ist es beispielsweise denkbar, die entsprechenden Anschlußöffnungen für die Anbauteile beziehungsweise den Abgasrückführkanal in der Unterschale anzuordnen, wenn es für die Einbausituation im Motor günstiger ist. Entsprechend ändern sich dann die benötigten Formen für die Ober- und Unterschale.

Es sollte deutlich sein, daß zum Antrieb der Ladungsbewegungsklappen je nach Anforderung auch eine Hitzewelle oder eine Zahnstange mit den jeweils entsprechenden Zahnsegmenten eingesetzt werden kann.

## Patentansprüche

1. Luftansaugkanalsystem für eine Verbrennungskraftmaschine, welches ein Gehäuse (2) mit einer Oberschale (3) und einer Unterschale (4) aufweist, welche miteinander verbunden einen Sammeleinlasskanal (5) und einzelne zu Zylindern der Verbrennungskraftmaschine führende Lufteinlasskanäle (6) bilden, wobei das Luftansaugkanalsystem (1) ein Abgasrückführventil (29), einen Abgasrückführkanal (7), einen Abgaskühler (11) und eine Abgaseinleitvorrichtung (37), über welche Abgas in den Sammeleinlaßkanal (5) des Luftansaugkanalsystems (1) einleitbar ist und eine Drosselklappe (40), über welche die angesaugte Luftmenge regelbar ist, aufweist, welche fest mit dem Luftansaugkanalsystem (1) verbunden sind, **dadurch gekennzeichnet, dass** der Abgasrückführkanal (7) im wesentlichen einstückig mit dem Gehäuse (2) des Luftansaugkanalsystems (1) hergestellt ist und das Abgasrückführventil (29) und die Drosselklappe (40) als Steckventile ausgeführt sind, welche in korrespondierende Öffnungen (28,42) des Gehäuses (2) einsteckbar sind.

2. Luftansaugkanalsystem nach Anspruch 1, **dadurch gekennzeichnet, dass** der Abgasrückführkanal (7) in Strömungsrichtung durch eine Trennwand (8) im wesentlichen in zwei parallele, im Querschnitt zur Strömungsrichtung einseitig offene Kanäle unterteilt ist, wobei der erste Kanal als Kühlkanal (9) und der zweite Kanal als Bypasskanal (10) dient und das Gehäuse des Abgasrückführkanals (7) eine Öffnung (20) aufweist, in welche eine Bypassklappe (19), die als Steckventil ausgeführt ist, einsteckbar ist.

3. Luftansaugkanalsystem nach Anspruch 1 oder 2, **dadurch gekennzeichnet, dass** der Abgasrückführkanal (7) und die Trennwand (8) einstückig mit der Oberschale (3) des Luftansaugkanalsystems (1) ausgebildet ist und die Öffnungen (20,28,42) für die korrespondierenden Steckventile (19,29,40) in der Oberschale (3) angeordnet sind.

4. Luftansaugkanalsystem nach einem der vorhergehenden Ansprüche, **dadurch gekennzeichnet, dass** die Steckventile (19,29,40) mit ihren Stellelementen (23,30,43), welche entsprechende Anschlussstecker (51) aufweisen, vormontiert sind und über Anschlussflansche (27,31,44) der Ventile (19,29,40) nach dem Einstecken in die korrespondierenden Öffnungen (20,28,42) eine luftdichte Verbindung zum Gehäuse (2) herstellbar ist.

5. Luftansaugkanalsystem nach einem der vorhergehenden Ansprüche, **dadurch gekennzeichnet, dass** der Abgaskühler (11) eine Wärmeübertragungseinheit (12) und ein Deckelteil (16) aufweist, wobei die Wärmeübertragungseinheit (12) im Kühlkanal (9) angeordnet ist, und eine Flanschplatte (15), welche zumindest die offene Seite des Kühlkanals (9) verschließt und einen von Kühlflüssigkeit durchströmten Kühlflüssigkeitskanal (13) aufweist, der im Querschnitt zur Strömungsrichtung einseitig offen ausgebildet ist, und wobei das Deckelteil (16) den Kühlflüssigkeitskanal (13) verschließt und einen Kühlflüssigkeitseinlassstutzen (17) und einen Kühlflüssigkeitsauslassstutzen (18) aufweist und die Flanschplatte (15) oder das Deckelteil (16) gleichzeitig die offene Seite des Bypasskanals (10) verschließt.

6. Luftansaugkanalsystem nach Anspruch 5, **dadurch gekennzeichnet, dass** die Wärmeübertragungseinheit (12) einstückig mit Formelementen (39) eines Strömungsleitkörpers (38) hergestellt ist, welcher mit dem Gehäuse (2) des Sammeleinlasskanals (5) die Abgaseinleitvorrichtung (37) bildet.

7. Luftansaugkanalsystem nach einem der Ansprüche 2-6, **dadurch gekennzeichnet, dass** die Bypassklappe (19) ihr Stellelement (23), eine durch ihr Stellelement (23) betätigbare Antriebswelle (22), einen fest mit der Welle (22) verbundenen Klappenkörper (21) und den Anschlussflansch (27) aufweist, der einen mit der Öffnung (20) des Abgasrückführkanals (7) korrespondierenden und in diese Öffnung (20) reichenden Absatz (24) aufweist, wobei dieser Absatz (24) zwei Anschläge (25,26) aufweist, durch welche die Endlagen des Klappenkörpers (21) festgelegt sind.

8. Luftansaugkanalsystem nach einem der vorhergehenden Ansprüche, **dadurch gekennzeichnet, dass** in den zu den einzelnen Zylindern führenden Lufteinlasskanälen (6) in der Unterschale (4) des Luftansaugkanalsystems (1) Ladungsbewegungsklappen (59) angeordnet sind.

9. Luftansaugkanalsystem nach Anspruch 8, **dadurch gekennzeichnet, dass** die Ladungsbewegungsklappen (59) strömungsoptimiert geformt sind.

10. Luftansaugkanalsystem nach Anspruch 8 oder 9, **dadurch gekennzeichnet, dass** die zu den einzelnen Zylindern führenden Lufteinlasskanäle (6) in der Unterschale (4) des Luftansaugkanalsystems (1) in ihrem in Strömungsrichtung gesehenen Endbereich jeweils eine Trennwand (52) aufweisen, welche jeden Kanal (4) in zwei Kanalteile (53,54) unterteilt, wobei zumindest ein Kanalteil (54) durch jeweils eine der Ladungsbewegungsklappen (59) beherrschbar ist.

11. Luftansaugkanalsystem nach Anspruch 10, **dadurch gekennzeichnet, dass** die Trennwand (52) jeweils in einem Einsatz (55) angeordnet ist, so dass dieser die Unterteilung in die zwei Kanalteile (53,54) herstellt, wobei der Einsatz (55) zumindest formschlüssig in die Lufteinlasskanäle (6) der Unterschale (4) gesteckt ist und seine Außenwände (56) im wesentlichen an den Innenwänden (57) der Lufteinlasskanäle (6) anliegen, und die Ladungsbewegungsklappen (59) im Einsatz (55) angeordnet sind.

12. Luftansaugkanalsystem nach Anspruch 11, **dadurch gekennzeichnet, dass** jeder Einsatz (55) eine Bohrung (61) aufweist, durch welche eine Betätigungswelle (60) reicht, auf der je eine der Ladungsbewegungsklappen (59) angeordnet ist, wobei die Betätigungswellen (60) jeweils durch entsprechende Ausnehmungen (62) in der Unterschale (4) nach außen reichen, wo sie jeweils fest mit einem Zahnradsegment (64) verbunden sind, wobei alle Zahnradsegmente (64) mit einer zumindest im Bereich der Zahnradsegmente (64) als Schneckenwelle (65) ausgeführten Welle (66) in Wirkverbindung stehen, welche durch eine Stellvorrichtung (67) in Drehung versetzbar ist, so dass die Stellvorrichtung (67) alle Ladungsbewegungsklappen (59) über die Schneckenwelle (65) und die Zahnradsegmente (64) synchron antreibt.

13. Luftansaugkanalsystem nach Anspruch 12, **dadurch gekennzeichnet, dass** die Betätigungswellen (60) nach außen in einen einseitig offenen Kanal (63) reichen, in dem die Zahnradsegmente (64), die Schneckenwelle (65) und die Stellvorrichtung (67) angeordnet sind, wobei der einseitig offene Kanal (63) in der Unterschale (4) ausgebildet und durch einen Deckel (68) verschlossen ist.

14. Luftansaugkanalsystem nach einem der Ansprüche 10-13, **dadurch gekennzeichnet, dass** die Trennwände (52) horizontal angeordnet sind, so dass die Ladungsbewegungsklappen (59) als Tumbleklappen dienen.

15. Luftansaugkanalsystem nach einem der Ansprüche 10-13, **dadurch gekennzeichnet, dass** die Trennwände (52) vertikal angeordnet sind, so dass jeder der beiden Kanäle (53,54) mit je einem Einlassventil eines Zylinders korrespondiert und die Ladungsbewegungsklappen (59) als Drallklappen dienen.

16. Luftansaugkanalsystem nach einem der vorhergehenden Ansprüche, **dadurch gekennzeichnet, dass** die Oberschale (3), die Unterschale (4) und die Wärmeübertragungseinheit (12) aus Druckguß, vorzugsweise Aluminiumdruckguß hergestellt sind.

17. Luftansaugkanalsystem nach einem der vorhergehenden Ansprüche, **dadurch gekennzeichnet, dass** das Gehäuse (2) des Luftansaugkanalsystems (1) eine Öffnung aufweist, in welcher ein Luftmassensensor angeordnet ist.

## Claims

1. Air intake duct system for an internal combustion engine, comprising a housing (2) having an upper shell (3) and a lower shell (4) which, in combination, form a main inlet duct (5) and individual air inlet ducts (6) leading to cylinders of the internal combustion engine, said air intake duct system (1) comprising an exhaust gas return valve (29), an exhaust gas return duct (7), an exhaust gas cooler (11) and a, exhaust gas introduction device (37) by which exhaust gas can be introduced into the main inlet duct (5) of the air intake duct system (1), and a throttle valve (40) by which the volume of air taken in can be controlled, which are firmly connected to the air intake duct system (1), **characterized in that** the exhaust gas return duct (7) is manufactured substantially integrally with the housing (2) of the air intake duct system (1) and the exhaust gas return valve (29) and the throttle valve (40) are configured as snap-in valves to be snapped in into corresponding openings (28, 42) of the housing (2).

2. Air intake duct system of claim 1, **characterized in that** a partition wall (8) substantially divides the exhaust gas return duct (7) in the flow direction so as to form two parallel ducts which, seen in cross section, are open on one side towards the flow direction, wherein the first duct serves as a cooling duct (9) and the second duct serves as a bypass duct (10) and the housing of the exhaust gas return duct (7) has an opening (20) into which a bypass valve (19) in the form of a snap-in valve can be snapped.

3. Air intake duct system of claim 1 or 2, **characterized in that** the exhaust gas return duct (7) and the partition wall (8) are formed integrally with the upper shell (3) of the air intake duct system (1) and the openings (20, 28, 42) for the corresponding snap-in valves (19, 29, 40) are arranged in the upper shell (3).

4. Air intake duct system of one of the preceding claims, **characterized in that** the snap-in valves (19, 29, 40) with their actuator elements (23, 30, 43) that comprise corresponding connector plugs (51) are pre-assembled, and that an airtight connection to the housing (2) can be made via connecting flanges (27, 31, 44) of the valve (19, 29, 40) after having been snapped into the corresponding openings (20, 28, 42).

5. Air intake duct system of one of the preceding claims, **characterized in that** the exhaust gas cooler (11) comprises a heat transfer unit (12) and a cover part (16), said heat transfer unit (12) being arranged in the cooling duct (9), and a flange plate (15) which at least closes the open side of the cooling duct (9) and comprises a coolant duct (13), flown through by a coolant, which, seen in cross section, is open on one side towards the flow direction, and wherein the cover part (16) closes the coolant duct (13) and comprises a coolant inlet socket (17) and a coolant outlet socket (18) and the flange plate (15) or the cover part (16) at the same time closes the open side of the bypass duct (10).

6. Air intake duct system of claim 5, **characterized in that** the heat transfer unit (12) is manufactured integrally with form elements (39) of a flow guide body (38) that forms the exhaust gas introduction unit (37) together with the housing (2) of the main inlet duct (5).

7. Air intake duct system of one of claims 2-6, **characterized in that** the by-pass valve (19) comprises its actuator element (23), a drive shaft (22) actuatable by the its actuator element (23), a valve body (21) firmly connected to the shaft (22), and the connecting flange (27) which has a shoulder (24) corresponding to the opening (20) of the exhaust gas return duct (7) and extending into this opening (20), said shoulder (24) comprising two stops (25, 26) defining the end positions of the valve body (21).

8. Air intake duct system of one of the preceding claims, **characterized in that** charge-motion valves (59) are arranged in the air inlet ducts (6) leading to the individual cylinders in the lower shell (4) of the air intake duct system (1).

9. Air intake duct system of claim 8, **characterized in that** the charge-motion valves (59) are shaped for flow-optimization.

10. Air intake duct system of claim 8 or 9, **characterized in that** the air inlet ducts (6) in the lower shell (4) of the air intake duct system (1), which lead to the individual cylinders, each comprise a partition wall (52) in their end portion, seen in the flow direction, which wall divides each duct (**6**) into two duct portions (53, 54), with at least one duct portion (54) being controllable by a respective one of the charge-motion valves (59).

11. Air intake duct system of claim 10, **characterized in that** the partition wall (52) is respectively arranged in an insert (55) so that the same realizes the division into said two duct portions (53, 54), the insert (55) being plugged at least in a form-fitting manner into said air inlet ducts (6) of the lower shell (4) and its outer walls (56) substantially abutting the inner walls (57) of the air inlet ducts (6), and the charge-motion valves (59) are arranged in the insert (55).

12. Air intake duct system of claim 11, **characterized in that** each insert (55) comprises a bore (61) through which an actuation shaft (60) extends on which one of the charge-motion valves (59) is arranged, respectively, wherein the actuation shafts (60) respectively extend to the outside through corresponding recesses (62) in the lower shell (4), where they are respectively fixedly connected to a pinion segment (64), wherein all pinion segments (64) are operatively connected to a shaft (66) which is designed as a worm shaft (65) at least in the area of the pinion segments (64), which shaft is rotatable by means of an actuator device (67) so that the actuator device (67) drives all charge-motion valves (59) synchronously via the worm shaft (65) and the pinion segments (64).

13. Air intake duct system of claim 12, **characterized in that** the actuation shafts (60) extend outwards into a duct (63) open to one side, in which the pinion segments (64), the worm shaft (65) and the actuator device (67) are arranged, wherein the duct (63) open to one side is formed in the lower shell (4) and is closed by a cover (68).

14. Air intake duct system of one of claims 10-13, **characterized in that** the partition walls (52) are arranged horizontally so that the charge-motion valves (59) serve as tumble flaps.

15. Air intake duct system of one of claims 10-13, **characterized in that** the partition walls (52) are arranged vertically so that each of the two ducts (53, 54) communicates with a respective inlet valve of a cylinder and the charge-motion valves (59) serve as swirl flaps.

16. Air intake duct system of one of the preceding claims, **characterized in that** the upper shell (3), the lower shell (4) and the heat transfer unit (12) are made of die-cast material, preferably die-cast aluminum.

17. Air intake duct system of one of the preceding claims, **characterized in that** the housing (2) of the air intake duct system (1) comprises an opening in which an air-flow sensor is arranged.

## Revendications

1. Système de canal d'aspiration d'air pour moteur à combustion interne, qui comprend un boitier (2) avec une coquille supérieure (3) et une coquille inférieure (4), qui, en combinaison, forment un canal collecteur d'entrée (5) et des canaux d'entrée d'air (6) individuels menant aux cylindres du moteur à combustion interne, ledit système de canal d'aspiration d'air (1) comprenant une vanne à récirculation de gaz d'échappement (29), un canal à récirculation de gaz d'échappement (7), un refroidisseur de gaz d'échappement (11) et un dispositif d'introduction de gaz d'échappement (37), par lequel de gaz d'échappement peut être introduit dans le canal collecteur d'entrée (5) dudit système de canal d'aspiration d'air (1), et une vanne papillon (40) par laquelle le volume d'air aspiré peut être réglé, lesdits éléments étant solidaires dudit système de canal d'aspiration d'air (1), **caractérisé en ce que** le canal à récirculation de gaz d'échappement (7) est produit sensiblement d'une seule pièce avec ledit boitier (2) du système de canal d'aspiration d'air (1) et que ladite vanne à récirculation de gaz d'échappement (29) et la vanne papillon (40) sont réalisées comme vannes embrochables aptes à être embrocher dans des ouvertures (28, 42) correspondantes dudit boitier (2).

2. Système de canal d'aspiration d'air selon la revendication 1, **caractérisé en ce qu'**une cloison de séparation (8) divise ledit canal à récirculation de gaz d'échappement (7), dans la direction d'écoulement, sensiblement en deux canaux parallèles qui, selon la section transversale, sont ouverts à un côté vers la direction d'écoulement, le premier canal faisant office de canal de refroidissement (9) et le deuxième canal faisant office de canal de by-pass (10) et le boitier du ledit canal à récirculation de gaz d'échappement (7) comprend une ouverture (20) dans laquelle on peut embrocher une vanne by-pass (19) réalisée comme vanne embrochable.

3. Système de canal d'aspiration d'air selon la revendication 1 ou 2, **caractérisé en ce que** ledit canal à récirculation de gaz d'échappement (7) et ladite cloison de séparation (8) sont formés d'une seule pièce avec ladite coquille supérieure (3) dudit système de canal d'aspiration d'air (1) et les ouvertures (20, 28, 42) pour les vannes embrochables (19, 29, 40) correspondantes sont prévues dans la coquille supérieure (3).

4. Système de canal d'aspiration d'air selon l'une quelconque des revendications précédentes, **caractérisé en ce que** les vannes embrochables (19, 29, 40) avec leurs éléments actionneurs (23, 30, 43), qui comprend des broches de connexion (51) correspondantes, sont pré-assemblées et qu'une connexion étanche à l'air peut être établie avec le boitier (2) au moyen de brides de raccordement (27, 31, 44) des vannes (19, 29, 40) après l'embrochage dans lesdites ouvertures (20, 28, 42) correspondantes.

5. Système de canal d'aspiration d'air selon l'une quelconque des revendications précédentes, **caractérisé en ce que** le refroidisseur de gaz d'échappement (11) comprend une unité de transfert de chaleur (12) et un élément couvercle (16), ladite unité de transfert de chaleur (12) étant arrangée dans ledit canal de refroidissement (9), et une plaque de bride (15) fermant au moins le côté ouvert du canal de refroidissement (9) et comprenant un canal de fluide de refroidissement (13) dans lequel s'écoule un fluide de refroidissement, ledit canal de refroidissement étant ouvert, selon la section transversale, à un côté vers la direction d'écoulement, et ledit élément couvercle (16) fermant ledit canal de fluide de refroidissement (13) et comprenant une tubulure d'entrée de fluide de refroidissement (17) et une tubulure de sortie de fluide de refroidissement (18), ou la plaque de bride (15) ou l'élément couvercle (16) à la fois ferme le côté ouvert du canal de by-pass (10).

6. Système de canal d'aspiration d'air selon la revendication 5, **caractérisé en ce que** ladite unité de transfert de chaleur (12) est produite d'une seule pièce avec des éléments de forme (39) d'un corps de guidage de l'écoulement (38) qui forme, conjointement avec le boitier (2) du canal collecteur d'entrée (5), le dispositif d'introduction de gaz d'échappement (37).

7. Système de canal d'aspiration d'air selon l'une quelconque des revendications 2-6, **caractérisé en ce que** la vanne de by-pass (19) comprend son élément actuateur (23), un arbre d'entrainement (22) actionnable par son élément actuateur (23), un corps de vanne (21) solidaire de l'arbre (22), et ledit bride de raccordement (27) qui comprend un épaulement (24) correspondant à ladite ouverture (20) dudit canal à récirculation de gaz d'échappement (7) et s'étendant dans cette ouverture (20), ledit épaulement (24) comprenant deux butées (25, 26) définissant les positions extrêmes dudit corps de vanne (21).

8. Système de canal d'aspiration d'air selon l'une quelconque des revendications précédentes, **caractérisé en ce que** des volets de déplacement de charge (59) sont disposés dans les canaux d'entrée d'air (6), menant aux cylindres individuels, dans ladite coquille inférieure (4) du système de canal d'aspiration d'air (1).

9. Système de canal d'aspiration d'air selon la revendication 8, **caractérisé en ce que** les volets de déplacement de charge (59) sont formés pour optimiser l'écoulement.

10. Système de canal d'aspiration d'air selon la revendication 8 ou 9, **caractérisé en ce que** les canaux d'entrée d'air (6), menant aux cylindres individuels, dans ladite coquille inférieure (4) du système de canal d'aspiration d'air (1) respectivement comprennent une cloison de séparation (52) dans leur partie d'extrémité, vu dans la direction d'écoulement, ladite cloison divisant chaque canal (6) en deux parties de canal (53, 54), dans lesquelles au moins une partie de canal (54) peut être contrôlée par une, respectivement, des volets de déplacement de charge (59).

11. Système de canal d'aspiration d'air selon la revendication 10, **caractérisé en ce que** ladite cloison de séparation (52) est respectivement disposée dans un insert (55) de sorte que celui-ci réalise la division en les deux parties de canal (53, 54), ledit insert (55) étant inséré au moins de manière positive dans les canaux d'entrée d'air (6) de la coquille inférieure (4) et ses parois externes (56) sont sensiblement en contact avec les parois internes (57) des canaux d'entrée d'air (6), et que les volets de déplacement de charge (59) sont disposés dans ledit insert (55).

12. Système de canal d'aspiration d'air selon la revendication 11, **caractérisé en ce que** chaque insert (55) comprend un alésage (61) à travers lequel s'étend un arbre d'actionnement (60) sur lequel est disposé respectivement un des volets de déplacement de charge (59), les arbres d'actionnement (60) s'étendant à l'extérieur à travers des ouvertures (62) respectives dans ladite coquille inférieure (4), où ils sont connectés de manière solidaire à un segment de pignon, respectivement, tous les segments de pignon (64) sont en communication opératif avec un arbre (66) qui est configuré comme une vis sans fin (65) au moins dans la région des segments de pignons (64), ledit arbre étant apte à être tourné par un dispositif actionneur (67) de sorte que ledit dispositif actionneur (67) entraine tous les volets de déplacement de charge (59) par ladite vis sans fin (65) et les segments de pignon (64).

13. Système de canal d'aspiration d'air selon la revendication 12, **caractérisé en ce que** les arbres d'actionnement (60) s'étendent vers l'extérieur dans un canal (63) ouvert à un côté dans lequel sont situés les segments de pignon (64), la vis sans fin (65) et le dispositif actionneur (67), ledit canal (63) ouvert à un côté étant formé dans la coquille inférieure (4) et fermé par un couvercle (68).

14. Système de canal d'aspiration d'air selon l'une quelconque des revendications 10-13, **caractérisé en ce que** les cloisons de séparation (52) sont disposées horizontalement, de sorte que les volets de déplacement de charge (59) fonctionnent comme clapets de tumble.

15. Système de canal d'aspiration d'air selon l'une quelconque des revendications 10-13, **caractérisé en ce que** les cloisons de séparation (52) sont disposées verticalement, de sorte que chacun des deux canaux (53, 54) correspond à une vanne d'admission d'un cylindre, respectivement, et les volets de déplacement de charge (59) fonctionnent comme clapets de tourbillon.

16. Système de canal d'aspiration d'air selon l'une quelconque des revendications précédentes, **caractérisé en ce que** la coquille supérieure (3), la coquille inférieure (4) et l'unité de transfert de chaleur (12) sont moulés par injection, de préférence moulés par injection d'aluminium.

17. Système de canal d'aspiration d'air selon l'une quelconque des revendications précédentes, **caractérisé en ce que** le boitier (2) dudit système de canal d'aspiration d'air (1) comprend une ouverture, dans laquelle est disposé un capteur du débit massique d'air.
